(19) **Europäisches Patentamt**
**European Patent Office**
**Office européen des brevets**

(11) **EP 2 100 120 B1**

(12) **FASCICULE DE BREVET EUROPEEN**

(45) Date de publication et mention
de la délivrance du brevet:
**30.03.2011 Bulletin 2011/13**

(51) Int Cl.:
***G01M 3/24*** *(2006.01)*

(21) Numéro de dépôt: **07871962.2**

(22) Date de dépôt: **18.12.2007**

(86) Numéro de dépôt international:
**PCT/FR2007/052548**

(87) Numéro de publication internationale:
**WO 2008/087321 (24.07.2008 Gazette 2008/30)**

(54) **SYSTEME DE DETECTION ET DE LOCALISATION D'UN EVENEMENT DANS UNE CANALISATION DE TRANSPORT DE FLUIDE REALISE SELON UNE ARCHITECTURE HORIZONTALE**

SYSTEM ZUR ERKENNUNG UND ORTUNG EINES EREIGNISSES IN EINEM FLÜSSIGKEITSFÖRDERUNGSROHR MIT HORIZONTALER ARCHITEKTUR

SYSTEM FOR DETECTING AND LOCATING AN EVENT IN A FLUID CONVEYING PIPING HAVING A HORIZONTAL ARCHITECTURE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.12.2006 FR 0655824**

(43) Date de publication de la demande:
**16.09.2009 Bulletin 2009/38**

(73) Titulaire: **CYBERNETIX**
**13382 Marseille Cedex 13 (FR)**

(72) Inventeurs:
• **QUESNEL, Jean-Jacques**
**F-83270 Saint Cyr Sur Mer (FR)**
• **BESANCENOT, Fabien**
**F-13590 Meyreuil (FR)**

(74) Mandataire: **Domange, Maxime et al**
**Cabinet Beau de Lomenie**
**232, avenue du Prado**
**13295 Marseille Cedex 08 (FR)**

(56) Documents cités:
**WO-A-01/81885        WO-A-98/50771**
**DE-A1- 19 528 287        US-A1- 2006 174 707**
**US-B1- 6 567 006**

**Description**

Arrière-plan de l'invention

La présente invention se rapporte au domaine général des systèmes de détection et de localisation d'un évènement dans une canalisation de transport d'un fluide. Le fluide transporté peut être en phase gazeuse ou liquide. Le fluide peut être de l'eau, des hydrocarbures liquides ou gazeux ou tout autre fluide chimique ou pétrochimique.

Plus précisément, l'invention concerne de tels systèmes utilisant des modules déportés placés sur la canalisation et associés à au moins un capteur d'ondes acoustiques, de vibrations ou de contraintes.

Les évènements détectés par le système de détection et de localisation sont donc des évènements qui génèrent la propagation d'une onde acoustique, de vibrations ou de contraintes dans le fluide et/ou dans la structure même de la canalisation afin de pouvoir être enregistrés par les capteurs utilisés dans un Système de détection et de localisation selon l'invention.

Le système de détection et de localisation selon l'invention sera donc apte à détecter et localiser les impacts mécaniques, parmi lesquels des chocs, par exemple liés à des travaux de proximité ou encore au passage d'outils d'inspection, les fuites, qu'elles soient des fuites de corrosion ou des fuites accidentelles, les transitoires de pression, correspondant par exemple à l'ouverture ou à la fermeture de vannes, à la manipulation de piquages clandestins ou encore à l'apparition soudaine d'une fuite, notamment les fuites conséquentes à une rupture de canalisation. Il peut d'ailleurs se produire qu'une fuite ne génère pas assez de bruit pour être détectée autrement que par l'onde de pression générée en début ou en fin du phénomène de fuite.

Actuellement, les systèmes connus voir par exemple WO 01/81885, DE 195 28 287 et US 2006/174707 mettent en oeuvre des capteurs qui permettent l'acquisition d'un signal temporel. Le signal temporel est ensuite envoyé, par le module déporté associé au capteur, vers un dispositif centralisateur qui réalise l'analyse des signaux temporels reçus en provenance d'une pluralité de modules déportés afin de détecter, dans ces signaux temporels et dans leurs corrélations, la présence d'ondes acoustiques, de vibrations ou de contraintes révélatrices de l'occurrence d'un évènement.

Une telle architecture du système de détection et de localisation selon laquelle l'analyse des détections est réalisée au sein d'un dispositif centralisateur requiert l'implémentation de moyens de communication de débit suffisant pour transporter les signaux temporels entre chaque module déporté et le dispositif centralisateur.

Les modules déportés pouvant être physiquement très éloignés du dispositif centralisateur, cela peut s'avérer très pénalisant en termes de cout d'installation et de maintenance du système de détection et de localisation d'évènements.

Objet et résumé de l'invention

La présente invention a donc pour but de palier de tels inconvénients en proposant un système de détection et de localisation d'un évènement de type impact mécanique, fuite ou transitoire de pression dans une canalisation de transport de fluide, comprenant au moins deux modules déportés de détection destinés à être reliés entre eux par un réseau de communication et à être placés sur la canalisation séparés les uns des autres par des distances connues, chaque module déporté incluant au moins des moyens d'acquisition d'un signal temporel en provenance d'au moins un capteur d'ondes acoustiques ou de vibrations ou de contraintes associé au module déporté et repéré par rapport à celui-ci, des moyens d'horodatage du signal temporel, des moyens de traitement du signal temporel aptes à détecter des ondes acoustiques ou des vibrations ou des contraintes révélatrices d'un impact mécanique ou d'une fuite ou d'un transitoire de pression, des moyens d'émission et de réception aptes à émettre, via le réseau de communication, un signal de détection associé à l'horodate du signal temporel correspondant à la détection à destination du ou des modules déportés adjacents lors de la détection interne par les moyens de traitement du signal du module déporté d'ondes acoustiques ou de vibrations ou de contraintes révélatrices d'un impact mécanique ou d'une fuite ou d'un transitoire de pression, et à recevoir, via le réseau de communication, un ou des signaux de détection en provenance du ou des modules déportés adjacents, des moyens de confirmation et de localisation aptes à analyser la cohérence des signaux de détection de manière à confirmer et localiser l'impact mécanique ou la fuite ou le transitoire de pression.

Avec un tel système de détection et de localisation, chaque module déporté est apte à exploiter les signaux de détection envoyés par les modules déportés voisins afin de confirmer et de localiser un évènement. La confirmation et la localisation des évènements se fait donc de manière locale sans faire appel à des ressources éloignées et/ou centralisées. Selon l'invention, chaque paire ou triplet de modules déportés constitue ainsi un ensemble nécessaire et suffisant pour détecter, confirmer et localiser les évènements.

Selon l'invention, les moyens de confirmation et de localisation, présents dans chacun des modules, sont aptes à analyser la cohérence ou l'inter-corrélation du signal de détection tels que émis vers les modules voisins avec les signaux de détection reçus en provenance des modules voisins de manière à confirmer et localiser l'impact mécanique ou la fuite ou le transitoire de pression.

Le système fonctionne donc selon une architecture horizontale sans aucun superviseur central. En outre, la structure est en quelque sorte « mobile », la détection et la localisation pouvant avoir lieu indifféremment en tout module de la pluralité de modules. Les modules déportés étant tous équivalents et comprenant chacun tous les moyens pour être apte à détecter et à localiser un événement, le système est très robuste car, même en présence d'un module défectueux, il est possible que les modules voisins continuent de fonctionner. Notamment, un module voisin peut alors se substituer au module défectueux.

En outre, le module déporté qui confirme et localise chaque évènement est différent en fonction de l'endroit où a eu lieu l'évènement. Sa désignation en tant que module confirmateur est avantageusement automatique.

Ainsi, selon une caractéristique avantageuse de l'invention, chaque module déporté est apte à fonctionner selon deux modes, un mode dit détecteur et un mode dit confirmateur, le basculement en module déporté confirmateur étant déclenché lorsque, à la suite d'une détection au sein du module déporté considéré, le module déporté reçoit au moins un signal de détection dans le cas où le module déporté possède un seul module déporté adjacent ou lorsque le module déporté reçoit au moins deux signaux de détection dans le cas où le module déporté possède deux modules déportés adjacents.

Avec une telle caractéristique, au sein d'une paire ou d'un triplet de modules déportés, un (ou deux) module (s) reste(nt) détecteur(s) alors que le second ou le troisième passe en mode confirmateur automatiquement lorsqu'il reçoit un signal de détection en provenance des modules qui lui sont voisins.

En fonction de la localisation de l'évènement, il peut se produire que deux modules adjacents passent en mode confirmateur de manière simultanée. Dans un tel cas, les confirmations et localisations de ces deux modules coexistent sans que cela ne porte préjudice au fonctionnement du système. Néanmoins des mesures anti collisions peuvent être mises en oeuvre sur le réseau de communication pour éviter une telle situation. Il peut notamment s'agir d'un message de prise en charge de la confirmation et de la localisation envoyé avec un horodate vers les modules adjacents.

Dans un mode de réalisation particulier, les moyens d'émission et de réception sont aptes à ouvrir, quand les moyens de traitement détectent des ondes acoustiques ou des vibrations ou des contraintes révélatrices d'un impact mécanique ou d'une fuite ou d'un transitoire de pression, une fenêtre temporelle de réception de signaux de détection en provenance du ou des modules adjacents.

Dans une mise en oeuvre préférentielle, les moyens de traitement du signal temporel sont aptes à calculer un descripteur multi-composantes représentatif du signal temporel, basé sur une décomposition en N niveaux issus de la densité spectrale du signal temporel dans N bandes de fréquence et en au moins un niveau issu de calculs statistiques d'ordre supérieur et à analyser ces niveaux de manière à détecter un impact mécanique ou une fuite ou un transitoire de pression.

Avec une telle caractéristique, le descripteur, comportant moins de données que le signal temporel lui-même par échantillonnage de la densité de puissance spectrale du signal sur seulement un certain nombre de bandes de fréquences, permet de faire circuler entre les modules déportés des quantités de données moindres. Ainsi, il est possible d'utiliser des réseaux de communications à bas débits.

Ainsi, avantageusement, le signal de détection inclut tout ou partie du descripteur.

Selon une caractéristique particulière de l'invention, la détection d'un évènement est effective lorsque le dépassement d'un seuil de niveau préalablement déterminé est observé sur au moins une des composantes du descripteur issu du signal temporel acquis.

Avantageusement, les seuils utilisés pour chacune des composantes du descripteur sont auto adaptatifs, leur adaptation étant réalisée à l'aide du niveau moyen observé dans chacune des composantes du descripteur.

Le seuil adaptatif peut être calculé selon la formule suivante : Niveau moyen de la composante + M.(Ecart-type moyen de la composante), où M est un facteur de seuil commun pour toutes les composantes. M est par exemple supérieur à 3 et avantageusement compris entre 3 et 10. Le calcul du niveau moyen et de l'écart-type est par exemple effectué avec application d'un facteur d'oubli $a^{k-p}$ décroissant vers les mesures les plus anciennes, a étant égal à une valeur prédéfinie entre 0,9 et 0,99. On exprime alors la moyenne sous la forme suivante :
Moyenne = $[(1-a)/(1-a^k)]$ somme $[a^{k-p} * |X(p)|]$ avec p varie de 1 k qui est le nombre total de mesures.

Cela résulte en ce que les valeurs les plus anciennes ont moins de poids dans les calculs des moyennes.

Aussi, les types d'évènement sont avantageusement chacun associés à certaines composantes du descripteur de manière à permettre de les distinguer les uns des autres.

L'invention concerne également un procédé de détection et de localisation d'un évènement de type impact mécanique, fuite ou transitoire de pression dans une canalisation de transport de fluide, mettant en oeuvre au moins deux modules déportés de détection destinés à être reliés entre eux par un réseau de communication et à être placés sur la canalisation séparés les uns des autres par des distances connues, le procédé comprenant les étapes suivantes mises en oeuvre au sein de chaque module déporté :

- acquisition d'un signal temporel en provenance d'au moins un capteur d'ondes acoustiques ou de vibrations ou de contraintes associé au module déporté et repéré par rapport à celui-ci,

- horodatage du signal temporel,
- traitement du signal temporel de manière à détecter des ondes acoustiques ou des vibrations ou des contraintes révélatrices d'un impact mécanique ou d'une fuite ou d'un transitoire de pression,
- émission, via le réseau de communication, d'un signal de détection associé à l'horodate du signal temporel correspondant à la détection à destination du ou des modules déportés adjacents lors de la détection interne par les moyens de traitement du signal du module déporté d'ondes acoustiques ou de vibrations ou de contraintes révélatrices d'un impact mécanique ou d'une fuite ou d'un transitoire de pression,
- réception d'un ou plusieurs signaux de détection en provenance du ou des modules déportés adjacents,
- confirmation et localisation de l'impact mécanique, de la fuite ou du transitoire de pression par analyse de la cohérence des signaux de détection.

Selon une implémentation préférée, les différentes étapes du procédé sont déterminées par des instructions de programmes d'ordinateurs.

En conséquence, l'invention vise aussi un programme d'ordinateur sur un support d'informations, ce programme étant susceptible d'être mis en oeuvre dans un microprocesseur de module déporté. Ce programme comportant des instructions adaptées à la mise en oeuvre des étapes suivantes :

- acquisition d'un signal temporel en provenance d'au moins un capteur d'ondes acoustiques ou de vibrations ou de contraintes associé au module déporté et repéré par rapport à celui-ci,
- horodatage du signal temporel,
- traitement du signal temporel de manière à détecter des ondes acoustiques ou des vibrations ou des contraintes révélatrices d'un impact mécanique ou d'une fuite ou d'un transitoire de pression,
- émission, via le réseau de communication, d'un signal de détection associé à l'horodate du signal temporel correspondant à destination du ou des modules déportés adjacents lors de la détection interne par les moyens de traitement du signal du module déporté d'ondes acoustiques ou de vibrations ou de contraintes révélatrices d'un impact mécanique ou d'une fuite ou d'un transitoire de pression,
- réception d'un ou plusieurs signaux de détection en provenance du ou des modules déportés adjacents,
- confirmation et localisation de l'impact mécanique, de la fuite ou du transitoire de pression par analyse de la cohérence des signaux de détection.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur ou encore une carte mémoire.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente schématiquement un système de détection et de localisation d'évènement sur une canalisation de transport de fluide,
- la figure 2 représente schématiquement un module déporté selon l'invention,
- la figure 3 illustre schématiquement la décomposition d'un signal temporel sur une pluralité de bandes de fréquence ainsi que proposé selon un mode de réalisation préférentiel de l'invention.

Description détaillée d'un mode de réalisation

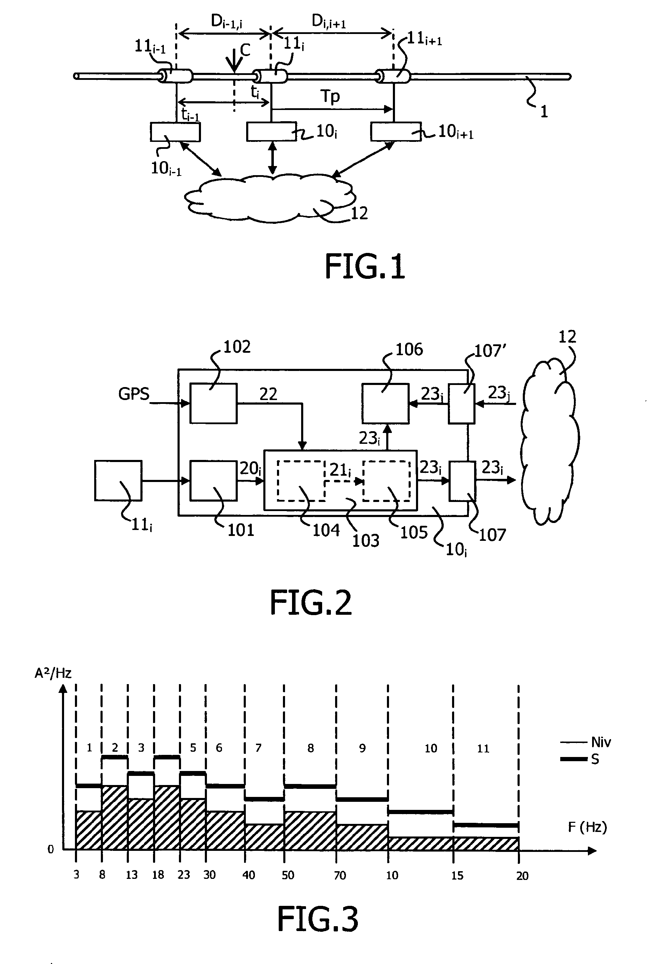

La figure 1 représente un système de détection et de localisation d'un évènement de type impact mécanique, fuite ou transitoire de pression dans une canalisation 1 de transport de fluide.

Ce système est constitué d'au moins deux modules déportés de détection $10_{i-1}$ et $10_i$, destinés à être reliés entre eux par un réseau 12 et à être placés à proximité de la canalisation 1 et séparés par une distance connue $D_{i-1,i}$. -

La figure 2 décrit plus précisément un module déporté $10_i$ selon l'invention. Chaque module déporté $10_i$ inclut au moins des moyens d'acquisition 101 d'un signal acoustique temporel $20_i$ en provenance d'au moins un capteur $11_i$ d'ondes acoustiques, de vibrations ou encore de contraintes associé au module déporté $10_i$. Le capteur $11_i$ est placé sur la canalisation 1, généralement au contact de celle-ci. Il est repéré géographiquement par rapport au module déporté $10_i$ auquel il est associé et, par conséquent, par rapport aux autres capteurs associés aux autres modules déportés. D'autant plus grande sera la précision avec laquelle sont connues les distances entre les capteurs qui reçoivent les ondes acoustiques, les vibrations ou les contraintes, d'autant plus grande sera la précision de localisation des impacts mécaniques et des fuites.

Il est envisageable qu'une pluralité de capteurs repérés par rapport à un module déporté soient associés à ce module qui acquiert alors les signaux temporels en provenance de chacun de ces capteurs. Néanmoins, dans la suite, la description considère un module déporté associé à un seul capteur.

Le système de détection et de localisation ainsi décrit avec au moins deux modules déportés $10_{i-1}$ et $10_i$ est apte à détecter et à localiser un évènement C ayant lieu entre les deux modules déportés $10_{i-1}$ et $10_i$.

Afin de pouvoir être détecté par le système de détection et de localisation selon l'invention, l'évènement doit donner lieu à propagation d'une onde, par exemple acoustique. Il peut s'agir d'un impact mécanique, d'une fuite ou encore d'un transitoire de pression. Les transitoires de pression sont observés lors des ouvertures ou fermetures de vannes ou de piquages clandestins ou encore lors de l'occurrence ou de la cessation d'une fuite. Ils présentent l'avantage d'être des ondes à basse fréquence généralement peu atténuées même dans les fluides très visqueux.

Pour réaliser la détection, chaque module déporté $10_i$ comprend des moyens de traitement 103 du signal temporel $20_i$ reçu en provenance des moyens d'acquisition 101.

Ces moyens de traitement 103 sont aptes à détecter des ondes acoustiques, des vibrations ou des contraintes révélatrices d'un impact mécanique, d'une fuite ou encore d'un transitoire.

Par ailleurs, selon l'invention, tous les modules déportés $10_i$, i = 0 à p, communiquent entre eux via un réseau de communication 12. Ce réseau peut être un réseau filaire utilisant une des technologies RTC (pour Réseau Téléphonique Commuté), TCP/IP (pour Transfert Control Protocol/Internet Protocol en anglais), UDP (pour User Datagram Protocol en anglais) ou encore SCADA (pour Supervisory Control and Data Acquisition en anglais) etc.

Le réseau 12 peut également être un réseau de communication radio utilisant une des technologies GSM (pour Global System for Mobile communication en anglais), GPRS (pour General Packet Radio Service en anglais), satellite etc.

Nous verrons dans un mode de réalisation préférentiel que l'invention permet en particulier d'utiliser des réseaux offrant une faible bande passante.

Les communications entre les modules déportés sont avantageusement réalisées par échange de messages formatés via le réseau de communications 12. Avec certains types de réseau, les modules déportés pourront communiquer entre eux de manière à se relayer les messages à transmettre.

Le module déporté $10_i$ est en outre muni de moyens d'horodatage 102. Par exemple, les moyens d'horodatage peuvent être basés sur l'utilisation d'une horloge radio-fréquentielle telle que généralement utilisée pour la mise à l'heure à distance de dispositifs délocalisés ou encore être basé sur l'utilisation de la technologie GPS (pour Global Positioning System en anglais). Dans le cas où le réseau 12 est un réseau rapide, une synchronisation des modules déportés peut être réalisée à l'aide d'une trame de synchronisation envoyée périodiquement à tous les modules.

De tels moyens présentent l'avantage d'être universels et donc communs et synchronisés pour tous les modules déportés, ce qui est nécessaire à la mise en oeuvre de l'invention.

Les moyens de traitement 103 sont alors aptes à mémoriser l'horodate 22, instant auquel est reçu un signal temporel $20_i$ dont le descripteur $21_i$ montre qu'il y a eu occurrence d'un évènement C. Avantageusement, à l'aide de ces moyens d'horodatage, le module déporté $10_i$ tient à jour un historique des détections survenues.

Outre les moyens de traitement du signal 103, chaque module déporté $10_i$ possède des moyens d'émission 107 aptes à émettre, via le réseau de communication, un signal de détection $23_i$ à destination du ou des modules déportés adjacents $10_{i-1}$ et $10_{i+1}$ lors de la détection interne par les moyens de traitement du signal 103 du module déporté $10_i$ d'ondes acoustiques ou de vibrations ou de contraintes révélatrices d'un impact mécanique ou d'une fuite ou d'un transitoire de pression.

Les principaux messages qui seront donc envoyés ou reçus par les modules déportés sont les messages incluant le signal de détection et envoyés vers le (ou les) module(s) déporté(s) adjacent(s). Le signal de détection inclut les informations nécessaires pour que l'évènement détecté soit confirmé et localisé au sein du module déporté confirmateur, à savoir au moins un identifiant du module déporté, l'horodate 22 de la détection, éventuellement le type de détection réalisé (impact mécanique, fuite ou transitoire).

Le module déporté $10_i$ comprend en outre des moyens de réception 107' pour recevoir, via le réseau de communication, un ou des signaux de détection $23_{i-1}$ et $23_{i+1}$, en provenance du ou des modules déportés adjacents $10_{i-1}$ et $10_{i+1}$. Avantageusement, ces moyens de réception 107' sont tels qu'à partir du moment où une détection d'évènement a eu lieu au sein de l'unité de détection 105, une fenêtre temporelle d'attente des détections signalées au sein des modules déportés adjacents $10_{i-1}, 10_{i+1}$ est ouverte.

Des messages « accusé de réception » sont avantageusement envoyés, à réception d'un message incluant un signal de détection, de chaque module déporté adjacent vers le module déporté émetteur. Ces messages d'accusé de réception comprennent l'identifiant du module déporté destinataire, la date et l'accusé de réception.

Avantageusement, des messages d'acquittement indiquent au module déporté émetteur d'un signal de détection que le signal de détection a bien été reçu et qu'il va être traité par un module déporté adjacent, devenant alors module confirmateur. Le module confirmateur envoie les messages d'acquittement dès qu'il a reçu les signaux de détection des deux modules adjacents $10_{i-1}, 10_{i+1}$. Un tel message d'acquittement vaut déclaration du module confirmateur en plus du message d'accusé de réception.

Le module déporté $10_i$ comprend enfin une unité d'analyse 106 apte à analyser la cohérence des signaux de détection $23_{i-1}$, $23_i$ et $23_{i+1}$ de manière à confirmer et localiser l'impact mécanique ou la fuite ou le transitoire de pression.

Ainsi, chaque module déporté $10_i$ analyse, en temps réel, les détections sur les modules adjacents $10_{i-1}, 10_{i+1}$ ainsi que ses propres détections internes. Il confirme et localise alors les impacts mécaniques ou fuites ou transitoires de pression en fonction des instants de détection et de leur énergie. Pour confirmer un évènement, l'unité d'analyse 106 utilise les signaux de détection qui incluent donc au moins une partie du signal temporel dans lequel a été détecté l'évènement ou un descripteur de ce signal associé à son horodate 22.

L'unité d'analyse 106 fait alors une évaluation de la cohérence des horodate de détection observés sur les modules déportés $10_{i-1}$, $10_i$ et $10_{i+1}$ et une évaluation de la cohérence de l'énergie du signal temporel.

Afin de vérifier la cohérence des instants de détection, il est nécessaire que soit connue la célérité des ondes acoustiques, des vibrations ou des contraintes révélatrices d'un impact mécanique ou d'une fuite ou encore d'un transitoire de pression.

Avantageusement, le système est tel qu'un calcul automatique de la célérité du son peut être réalisé. Un tel calcul peut, par exemple, être effectué lors de l'occurrence d'un évènement C ayant eu lieu entre les deux modules déportés $10_{i-1}$ et $10_i$, lorsque l'évènement est également détecté par le module déporté $10_{i+1}$ adjacent au module $10_i$. On utilisera alors la durée $Tp = t_{i+1} - t_i$, $t_i$ étant l'instant de détection au sein du module $10_i$, de propagation de l'onde acoustique entre les deux modules déportés $10_i$, $10_{i+1}$ formant le tronçon de canalisation adjacent au tronçon où a eu lieu l'évènement C situé entre les modules $10_{i-1}$ et $10_i$.

Dans ce cas, la célérité du son V sera égale à $D_{i,i+1} / Tp$.

La cohérence des instants de détection sur les trois modules déportés adjacents $10_{i-1}, 10_i, 10_{i+1}$ peut se faire par comparaison des instants de détection tels qu'observés avec les instants théoriques maximum d'arrivée de l'évènement sur les modules adjacents $10_{i-1}, 10_{i+1}$ en fonction de l'instant de détection observé en interne dans chaque module déporté $10_i$. On peut inclure ici un facteur d'erreur paramétrable qui prendra en compte un éventuel décalage.

Afin de détecter la cohérence entre les niveaux de détection des bandes en détection sur les trois modules déportés, un facteur d'atténuation avec marge d'erreur paramétrable est avantageusement utilisé. Par exemple, un tel facteur d'atténuation prendra la forme :

Atténuation = $(20.\log(Niv_{i-1}/Niv_i))/((D_{i-1,i}-2.d)$ où $Niv_{i-1}$ est le niveau maximum observé, dans une bande de fréquence donnée, par le module $10_{i-1}$, $Niv_i$ est le niveau maximum détecté par le module $10_i$ et d est la distance entre le lieu de l'évènement C et le module déporté $10_i$.

Il est comparé à un facteur d'atténuation théorique qui peut être calculé préalablement dans la canalisation 1 en utilisant, comme pour le calcul de la célérité dans la canalisation 1, le tronçon adjacent à un tronçon en détection.

Quand un évènement est confirmé, pour calculer la position de cet évènement, l'unité d'analyse 106 utilise la célérité du son V dans la canalisation ainsi que les instants de détection observés.

La localisation de l'évènement C par rapport au module $10_i$ s'exprime selon l'équation suivante :

$$d = (D_{i-1,i} - V.(t_{i-1}-t_i))/2$$

Dans le cas d'une fuite, il n'est pas nécessaire que l'unité d'analyse 106 réalise une évaluation des corrélations entre les signaux observés. En revanche, les horodates de détection sont utilisés afin de localiser la fuite.

Dans le cas où un évènement est confirmé et localisé, c'est-à-dire que sont reçus des signaux de détection en provenance des modules adjacents $10_{i-1}, 10_i, 10_{i+1}$ et que ces signaux sont cohérents, le module déporté dans lequel l'évènement a été confirmé et localisé devient automatiquement confirmateur. Il est en outre apte à envoyer un message d'alarme aux utilisateurs comprenant l'identifiant du module déporté ayant localisé et confirmé l'évènement, la date, le type d'évènement et sa localisation sur le réseau de communications. Le destinataire d'un tel message d'alarme peut éventuellement retourner un message d'acquittement vers le module déporté $10_i$.

Un tel message d'alarme peut être envoyé sur le réseau 12 ou sur un tout autre réseau fonctionnant selon une technologie différente. Par exemple, le module déporté $10_i$ confirmateur sera apte à envoyer un SMS. Chaque module déporté est donc apte à envoyer une confirmation et une localisation d'impact mécanique de fuite ou de transitoire de pression à un utilisateur.

En revanche, dans le cas où aucune autre détection n'est reçue en provenance des modules déportés adjacents $10_{i-1}, 10_{i+1}$ durant la fenêtre temporelle ouverte lors d'une détection interne dans le module déporté, la détection du module $10_i$ est oubliée.

L'unité d'analyse 106 est aussi apte à vérifier que la position calculée de l'évènement est cohérente, en particulier qu'elle est comprise entre les modules déportés adjacents au même tronçon $10_{i-1}, 10_i$ au sein desquels la localisation a lieu.

Aussi, dans le cas où il y a bien confirmation d'un évènement mais que cet évènement est situé, au vu des instants de détection dans le ou les module(s) adjacent(s), à l'extérieur de la zone comprise entre les modules directement adjacents $10_{i-1}, 10_{i+1}$, l'évènement est rejeté et aucun message d'alarme n'est émis.

Dans une réalisation préférée, illustrée par des pointillés sur la figure 2, les moyens de traitement 103 incluent une unité de calcul 104 apte à calculer un descripteur $21_i$ multi-composantes représentatif du signal temporel $20_i$, basé sur une décomposition en N niveaux issus de la densité spectrale du signal temporel dans N bandes de fréquence et en au moins un niveau issu de calculs statistiques d'ordre supérieur et une unité de détection 105 apte à analyser ces niveaux de manière à détecter un impact mécanique ou une fuite ou un transitoire de pression.

La figure 3 donne un exemple de 12 fréquences entre lesquelles sont définies N=11 bandes de fréquence dans lesquelles est décomposé le signal temporel $20_i$ au sein de l'unité de calcul 104. La décomposition du signal temporel $20_i$ comprend un filtrage préalable puis l'extraction d'une densité spectrale de puissance exprimée ensuite par des niveaux Niv sur la pluralité de bandes de fréquence 1 à 11 sélectionnées. Les niveaux sont donnés dans une unité $A^2$/Hz, A étant l'unité des mesures du capteur, par exemple des Pascals Pa.

Avantageusement, un niveau complémentaire issu de calculs statistiques d'ordre supérieur est ajouté aux composantes du descripteur.

Au sein de l'unité de détection 105, la détection d'un évènement impact mécanique, fuite ou transitoire de pression est effective lorsque le dépassement d'un seuil S de niveau préalablement déterminé est observé sur au moins une des composantes, parmi lesquelles les niveaux Niv représentés sur la figure 3, du descripteur $21_i$ issu du signal temporel $20_i$.

Avantageusement, selon le mode de réalisation préférentiel, le signal de détection $23_i$ envoyé par le module déporté $10_i$ n'inclura pas une partie du signal temporel mais tout ou partie du descripteur calculé. Dans la mesure où le descripteur $21_i$ contient moins de données que le signal temporel $20_i$ lui-même, le réseau 12 grâce auquel les modules déportés $10_i$ communiquent pourra être un réseau de faible bande passante.

Le signal de détection $23_i$ comprendra avantageusement seulement les bandes en détection, c'est-à-dire les bandes dans lesquelles un dépassement de seuil a eu lieu, et les niveaux dans ces bandes, ainsi que le niveau issu de calculs statistiques d'ordre supérieur si un dépassement y est observé, en plus de l'horodate de la détection.

Dans le cadre de cette réalisation préférentielle, l'unité d'analyse 106 vérifie non seulement la cohérence des instants de détection sur les modules déportés adjacents mais également la cohérence des bandes, dites en détection, dans lesquelles une détection d'évènement a eu lieu au sein des modules adjacents. L'unité d'analyse 106 vérifie aussi la cohérence des niveaux de détection dans chacune des bandes en détection des trois modules déportés adjacents. Le cas échéant, l'unité d'analyse 106 vérifie aussi la cohérence dans le niveau issu de calculs statistique d'ordre supérieur.

Dans une réalisation avantageuse, le module déporté $10_i$ comprend un micro-processeur associé à une mémoire non volatile dans laquelle sont stockés des paramètres de configuration pour l'ensemble des fonctions réalisées par le module déporté, en particulier les fonctions des moyens de traitement 103 et de l'unité d'analyse 106.

Il est en effet nécessaire que le module déporté $10_i$ ait à sa disposition des paramètres de configuration, non seulement pour la détection mais aussi pour évaluer la cohérence des signaux de détection ainsi que pour communiquer avec les modules déportés adjacents $10_{i-1}, 10_{i+1}$. Ces paramètres sont alors lus au démarrage du module déporté $10_i$ dans des fichiers de configuration sauvegardés dans la mémoire interne non volatile du module déporté $10_i$.

Parmi les paramètres de configuration, il est nécessaire que chaque module déporté dispose d'un identifiant qui lui soit particulier, par exemple j allant de 0 à P, ainsi que d'une adresse au sein du réseau 12. Les paramètres de configuration comprennent également les adresses des modules déportés se trouvant en amont et en aval et les distances entre les modules déportés.

Le type du réseau 12, la célérité acoustique dans la conduite 1, l'atténuation acoustique minimum dans la conduite 1 peuvent également être sauvegardés en tant que paramètres de configuration.

Des paramètres décrivant la durée d'analyse, le recouvrement entre les durées analysées, le nombre d'évènements mis en historique sont avantageusement également sauvegardés.

On remarque enfin que diverses mises en oeuvre peuvent être réalisées selon les principes de l'invention définis par les revendications suivantes.

**Revendications**

1. Système de détection et de localisation d'un évènement [C] de type impact mécanique, fuite ou transitoire de pression dans une canalisation [1] de transport de fluide, comprenant une pluralité de modules déportés [$10_{i-1}$, $10_i$] de détection destinés à être reliés entre eux par un réseau de communication [12] et à être placés sur la canalisation [1] séparés les uns des autres par des distances connues [$D_{i-1,i}$], chaque module déporté [$10_i$] incluant au moins :

   - des moyens d'acquisition [101] d'un signal temporel [$20_i$] en provenance d'au moins un capteur [$11_i$] d'ondes acoustiques ou de vibrations ou de contraintes associé au module déporté [$10_i$] et repéré par rapport à celui-ci,
   - des moyens d'horodatage [102] du signal temporel [$20_i$],
   - des moyens de traitement [103] du signal temporel [$20_i$] aptes à détecter des ondes acoustiques ou des vibrations ou des contraintes révélatrices d'un impact mécanique ou d'une fuite ou d'un transitoire de pression, **caractérisé par**
   - des moyens d'émission [107] et de réception [107'] aptes à émettre, via le réseau de communication, un signal de détection [$23_i$] associé à l'horodate [22] du signal temporel [$20_i$] correspondant à la détection à destination du ou des modules déportés adjacents [$10_{i-1}$,$10_{i+1}$] lors de la détection interne par les moyens de traitement [103] du module déporté [$10_i$] d'ondes acoustiques ou de vibrations ou de contraintes révélatrices d'un impact mécanique ou d'une fuite ou d'un transitoire de pression, et à recevoir, via le réseau de communication, un ou des signaux de détection [$23_j$, j=i-1$_{,i+1}$] en provenance du ou des modules déportés adjacents [$10_{i-1}$, $10_{i+1}$],
   - des moyens de confirmation et de localisation [106] aptes à analyser la cohérence des signaux de détection [$23_{i-1}$,$23_i$,$23_{i+1}$] de manière à confirmer et localiser l'impact mécanique ou la fuite ou le transitoire de pression.

2. Système de détection et de localisation selon la revendication 1, **caractérisé en ce que** chaque module déporté [$10_i$] est apte à fonctionner selon deux modes, un mode dit détecteur et un mode dit confirmateur, le basculement en module déporté confirmateur étant déclenché lorsque, à la suite d'une détection au sein du module déporté [$10_i$] considéré, le module déporté [$10_i$] reçoit au moins un signal de détection [$23_{i-1}$] dans le cas où le module déporté [$10_i$] possède un seul module déporté adjacent [$10_{i-1}$] ou lorsque le module déporté [$10_i$] reçoit au moins deux signaux de détection [$23_{i-1}$,$23_{i+1}$] dans le cas où le module déporté [$10_i$] possède deux modules déportés adjacents [$10_{i-1}$,$10_{i+1}$].

3. Système de détection et de localisation selon l'une des revendications 1 et 2, **caractérisé en ce que** les moyens d'émission [107] et de réception [107'] sont aptes à ouvrir, quand les moyens de traitement [103] détectent des ondes acoustiques ou des vibrations ou des contraintes révélatrices d'un impact mécanique ou d'une fuite ou d'un transitoire de pression, une fenêtre temporelle de réception de signaux de détection [$23_i$] en provenance du ou des modules adjacents [$10_j$,j=i-1$_{,i+1}$].

4. Système de détection et de localisation selon l'une des revendications précédentes, **caractérisé en ce que** les moyens de traitement [103] du signal temporel [$20_i$] sont aptes à calculer un descripteur multi-composantes [$21_i$] représentatif du signal temporel [$20_i$], basé sur une décomposition en N niveaux [Niv] issus de la densité spectrale du signal temporel [$20_i$] dans N bandes de fréquence et à analyser ces niveaux [Niv] de manière à détecter un impact mécanique ou une fuite ou un transitoire de pression.

5. Système de détection et de localisation selon la revendication 4, **caractérisé en ce que** le descripteur [$21_i$] comprend en outre au moins un niveau issu de calculs statistiques d'ordre supérieur.

6. Système de détection et de localisation selon l'une des revendications 4 et 5, **caractérisé en ce que** le signal de détection [$23_i$] inclut tout ou partie du descripteur [$21_i$].

7. Système de détection et de localisation selon l'une des revendications 4 à 6, **caractérisé en ce que** la détection d'un évènement [C] est effective lorsque le dépassement d'un seuil [S] de niveau préalablement déterminé est observé sur au moins un des niveaux [Niv] composante du descripteur [$21_i$] issu du signal temporel acquis.

8. Système de détection et de localisation selon la revendication 7, **caractérisé en ce que** les seuils [S] utilisés pour chacune des composantes [Niv] du descripteur [$21_i$] sont auto adaptatifs, leur adaptation étant réalisée à l'aide du niveau moyen observé dans chacune des composantes du descripteur [$21_i$].

9. Système de détection et de localisation selon la revendication 8, **caractérisé en ce que** le seuil [S] adaptatif pour au moins une des composantes du descripteur est calculé selon la formule suivante : Niveau moyen de la composante + M.(Ecart-type moyen de la composante).

**10.** Système de détection et de localisation selon la revendication 9, **caractérisé en ce que** le niveau moyen et l'écart-type moyen sont calculés par application d'un facteur d'oubli décroissant vers les valeurs les plus anciennes utilisées dans le calcul des moyennes.

**11.** Système de détection et de localisation selon l'une des revendications précédentes, **caractérisé en ce que** les types d'évènement [C] sont chacun associés à certaines composantes [Niv] du descripteur de manière à permettre leur distinction.

**12.** Procédé de détection et de localisation d'un évènement [C] de type impact mécanique, fuite ou transitoire de pression dans une canalisation [1] de transport de fluide, mettant en oeuvre au moins deux modules déportés [$10_{i-1}$, $10_i$] de détection destinés à être reliés entre eux par un réseau de communication [12] et à être placés sur la canalisation [1] séparés les uns des autres par des distances connues [$D_{i-1,i}$], le procédé comprenant les étapes suivantes mises en oeuvre au sein de chaque module déporté [$10_i$] :

- acquisition d'un signal temporel [$20_i$] en provenance d'au moins un capteur [$11_i$] d'ondes acoustiques ou de vibrations ou de contraintes associé au module déporté [$10_i$] et repéré par rapport à celui-ci,
- horodatage [22] du signal temporel [$20_i$],
- traitement du signal temporel [$20_i$] de manière à détecter des ondes acoustiques ou des vibrations ou des contraintes révélatrices d'un impact mécanique ou d'une fuite ou d'un transitoire de pression, **caractérisé par**
- émission, via le réseau de communication [12], d'un signal de détection [$23_i$] associé à l'horodate [22] du signal temporel [$20_i$] correspondant à la détection à destination du ou des modules déportés adjacents [$10_{i-1}$, $10_{i+1}$] lors de la détection interne par les moyens de traitement [103] du module déporté [$10_i$] d'ondes acoustiques ou de vibrations ou de contraintes révélatrices d'un impact mécanique ou d'une fuite ou d'un transitoire de pression,
- réception, via le réseau de communication [12], d'un ou plusieurs signaux de détection [$23_j$] en provenance du ou des modules déportés adjacents [$10_j$,j=i-1,i+1],
- confirmation et localisation de l'impact mécanique, de la fuite ou du transitoire de pression par analyse de la cohérence des signaux de détection [$23_{i-1}$,$23_i$,$23_{i+1}$].

**Claims**

**1.** A detection and location system for detecting and localizing an event [C] of the mechanical impact, leak, or pressure transient type in a fluid transport pipe [1], the system comprising a plurality of remote detector modules [$10_{i-1}$, $10_i$] for connecting together by means of a communications network [12] and for being placed on the pipe [1] spaced apart from one another by known distances [$D_{i-1,i}$] , each remote module [$10_i$] including at least:

- acquisition means [101] for acquiring a time signal [$20_i$] coming from at least one acoustic wave, or vibration, or stress sensor [$11_i$] associated with the remote module [$10_i$] and identified relative thereto;
- time-stamp means [102] for time-stamping the time signal [$20_i$] ; and
- processor means [103] for processing the time signal [$20_i$] and suitable for detecting acoustic waves, vibration, or stresses indicative of a mechanical impact, a leak, or a pressure transient;

the system being **characterized by**:

- transmission and reception means [107, 107'] suitable for transmitting, via the communications network, a detection signal [$23_i$] associated with the time [22] of the time signal [$20_i$] corresponding to the detection, the signal being addressed to the adjacent remote module (s) [$10_{i-1}$, $10_{i+1}$] when the processor means [103] of the remote module [$10_i$] detects acoustic waves or vibration or stresses indicative of a mechanical impact, a leak, or a pressure transient, and suitable for receiving, via the communications network, one or more detection signals [$23_j$, j=i-1,i+1] from the adjacent remote module (s) [$10_{i-1}$, $10_{i+1}$] ; and
- confirmation and location means [106] suitable for analyzing the consistency of the detection signals [$23_{i-1}$, $23_i$, $23_{i+1}$] so as to confirm and localize the mechanical impact, leak, or pressure transient.

**2.** A detection and location system according to claim 1, **characterized in that** each remote module [$10_i$] is suitable for operating in two modes, a "detector" mode and a "confirmer" mode, the changeover to a confirmer remote module being triggered, following a detection within the remote module [$10_i$] in question, when the remote module [$10_i$] receives at least one detection signal [$23_{i-1}$] in the case the remote module in question [10i] possesses only one adjacent remote module [$10_{i-1}$], or when the remote module [$10_i$] receives at least two detection signals [$23_{i-1}$, $23_{i+1}$] in the case the remote module in question [10i] possesses two adjacent remote modules [$10_{i-1}$, $10_{i+1}$].

3. A detection and location system according to claim 1 or claim 2, **characterized in that** the transmission and reception means [107, 107'] are suitable, when the processor means [103] detects acoustic waves or vibration or stresses indicative of a mechanical impact, a leak, or a pressure transient, for opening a time window for receiving detection signals [$23_j$] from the adjacent module (s) [$10_j$, j=i-1, i+1].

4. A detection and location system according to any preceding claim, **characterized in that** the processor means [103] for processing the time signal [$20_i$] are suitable for calculating a multicomponent descriptor [$21_i$] representative of the time signal [$20_i$], based on an N-level [Niv] decomposition of the spectrum density of the time signal [$20_i$] into N frequency bands, and suitable for analyzing these levels [Niv] in such a manner as to detect a mechanical impact, a leak, or a pressure transient.

5. A detection and location system according to claim 4, **characterized in that** the descriptor [$21_i$] also includes at least one level derived from higher order statistical calculation.

6. A detection and location system according to claim 4 or claim 5, **characterized in that** the detection signal [$23_i$] includes all or part of the descriptor [$21_i$].

7. A detection and location system according to any one of claims 4 to 6, **characterized in that** the detection of an event [C] becomes effective when at least one of the component levels [Niv] of the descriptor [$21_i$] from the acquired time signal is observed to exceed a previously-determined level threshold [S].

8. A detection and location system according to claim 7, **characterized in that** the thresholds [S] used for each of the components [Niv] of the descriptor [$21_i$] are self-adaptive, the thresholds being adapted using the mean level observed in each of the components of the descriptor [$21_i$].

9. A detection and location system according to claim 8, **characterized in that** the adaptive thresholds [S] for at least one of the components of the descriptor is calculated using the following formula:

```
mean level of the component + M.[mean standard deviation
                    of the component]
```

10. A detection and location system according to claim 9, **characterized in that** the mean level and the mean standard deviation are calculated by applying a forgetting factor that decreases towards the oldest values used in calculating the means.

11. A detection and location system according to any preceding claim, **characterized in that** each of the types of event [C] is associated with certain components [Niv] of the descriptor so as to enable them to be distinguished.

12. A method of detecting and localizing an event [C] of the mechanical impact, leak, or pressure transient type in a fluid transport pipe [1], the method implementing at least two remote detector modules [$10_{i-1}$, $10_i$] for connecting together by means of a communications network [12] and for being placed on the pipe [1] spaced apart from one another by known distances [$D_{i-1,i}$], the method including the following steps implemented within each remote module [$10_i$] :

• acquiring a time signal [$20_i$] from at least one acoustic wave or vibration or stress sensor [$11_i$] associated with the remote module [$10_i$] and identified relative thereto;
• time-stamping [22] the time signal [$20_i$]; and
• processing the time signal [$20_i$] in such a manner as to detect acoustic waves or vibrations or stresses indicative of a mechanical impact, a leak, or a pressure transient;

the method being **characterized by** the following steps:

• transmitting, over the communications network [12], a detection signal [23$_i$] associated with the time [22] of the time signal [20$_i$] corresponding to the detection, the signal being addressed to the adjacent module (s) [10$_{i-1}$, 10$_{i+1}$] when the processor means [103] of the remote module [10$_i$] detect internally acoustic waves or vibrations or stresses indicative of a mechanical impact, or a leak, or a pressure transient;

• receiving, via the communications network [12], one or more detection signals [23$_j$] from the adjacent remote module (s) [10$_j$, j=i-1, i+1] ; and

• confirming and localizing the mechanical impact, the leak, or the pressure transient by analyzing the consistency of the detection signals [23$_{i-1}$, 23$_i$, 23$_{i+1}$].

**Patentansprüche**

1. System zur Erfassung und Lokalisierung eines Ereignisses (C) vom Typ heftiger mechanischer Stoß, Leck oder Drucktransiente in einer Rohrleitung (1) zum Befördern eines Fluids, umfassend eine Vielzahl von abgesetzten Erfassungsmodulen (10$_{i-1}$, 10$_i$), die dazu bestimmt sind, durch ein Kommunikationsnetz (12) untereinander verbunden zu werden und an der Rohrleitung (1) durch bekannte Abstände (D$_{i-1,i}$) getrennt voneinander angeordnet zu werden, wobei jedes abgesetzte Modul (10$_i$) wenigstens enthält:

    - Mittel (101) zum Erfassen eines Zeitsignals (20$_i$), das von wenigstens einem Sensor (11$_i$) für Schallwellen oder Erschütterungen oder Belastungen stammt, der dem abgesetzten Modul (10$_i$) zugeordnet und ihm gegenüber festgelegt ist,
    - Mittel (102) zum Zeitstempeln des Zeitsignals (20$_i$),
    - Mittel (103) zum Verarbeiten des Zeitsignals (20$_i$), die geeignet sind, Schallwellen oder Erschütterungen oder Belastungen, welche einen heftigen mechanischen Stoß oder ein Leck oder eine Drucktransiente erkennen lassen, zu erfassen,
    **gekennzeichnet durch**
    - Sendemittel (107) und Empfangsmittel (107'), die geeignet sind, bei der internen Erfassung - **durch** die Verarbeitungsmittel (103) des abgesetzten Moduls (10$_i$) - von Schallwellen oder Erschütterungen oder Belastungen, welche einen heftigen mechanischen Stoß oder ein Leck oder eine Drucktransiente erkennen lassen, über das Kommunikationsnetz ein Erfassungssignal (23$_i$), das dem Zeitstempel (22) des der Erfassung entsprechenden Zeitsignals (20$_i$) zugeordnet ist, an das oder die benachbarten abgesetzten Module (10$_{i-1}$, 10$_{i+1}$) zu senden, und ein Erfassungssignal oder Erfassungssignale (23$_j$, j=i-1$_{,i+1}$) von dem oder den benachbarten abgesetzten Modulen (10$_{i-1}$, 10$_{i+1}$) über das Kommunikationsnetz zu empfangen,
    - Bestätigungs- und Lokalisierungsmittel (106), die geeignet sind, die Kohärenz der Erfassungssignale (23$_{i-1}$, 23$_i$, 23$_{i+1}$) zu analysieren, um den heftigen mechanischen Stoß oder das Leck oder die Drucktransiente zu bestätigen und zu lokalisieren.

2. Erfassungs- und Lokalisierungssystem nach Anspruch 1, **dadurch gekennzeichnet, daß** jedes abgesetzte Modul (10$_i$) geeignet ist, in zwei Modi zu arbeiten, einem sogenannten Erfassungsmodus und einem sogenannten Bestätigungsmodus, wobei das Umschalten zum abgesetzten Bestätigungsmodul dann ausgelöst wird, wenn infolge einer Erfassung innerhalb des betrachteten abgesetzten Moduls (10$_i$) das abgesetzte Modul (10$_i$) - in dem Fall, in dem das abgesetzte Modul (10$_i$) ein einziges benachbartes abgesetztes Modul (10$_{i-1}$) besitzt - wenigstens ein Erfassungssignal (23$_{i-1}$) empfängt oder wenn - in dem Fall, in dem das abgesetzte Modul (10$_i$) zwei benachbarte abgesetzte Module (10$_{i-1}$, 10$_{i+1}$) besitzt - das abgesetzte Modul (10$_i$) wenigstens zwei Erfassungssignale (23$_{i-1}$, 23$_{i+1}$) empfängt.

3. Erfassungs- und Lokalisierungssystem nach einem der Ansprüche 1 und 2, **dadurch gekennzeichnet, daß** die Sendemittel (107) und Empfangsmittel (107') geeignet sind, wenn die Verarbeitungsmittel (103) Schallwellen oder Erschütterungen oder Spannungen erfassen, die einen heftigen mechanischen Stoß oder ein Leck oder eine Drucktransiente erkennen lassen, ein Zeitfenster zum Empfangen von Erfassungssignalen (23$_j$) von dem oder den benachbarten Modulen (10$_j$, j=i-1, $_{i+1}$) zu öffnen.

4. Erfassungs- und Lokalisierungssystem nach einem der vorhergehenden Ansprüche, **dadurch gekennzeichnet, daß** die Mittel (103) zum Verarbeiten des Zeitsignals (20$_i$) geeignet sind, einen für das Zeitsignal (20$_i$) repräsentativen Mehrkomponentendeskriptor (21$_i$), basierend auf einer Zerlegung in N Pegel (Niv), die aus der Spektraldichte des Zeitsignals (20$_i$) in N Frequenzbändern hervorgehen, zu berechnen und diese Pegel (Niv) zu analysieren, um einen heftigen mechanischen Stoß oder ein Leck oder eine Drucktransiente zu detektieren.

**5.** Erfassungs- und Lokalisierungssystem nach Anspruch 4, **dadurch gekennzeichnet, daß** der Deskriptor $(21_i)$ ferner wenigstens einen Pegel umfaßt, der aus statistischen Berechnungen höherer Ordnung hervorgeht.

**6.** Erfassungs- und Lokalisierungssystem nach einem der Ansprüche 4 und 5, **dadurch gekennzeichnet, daß** das Erfassungssignal $(23_i)$ den gesamten Deskriptor $(21_i)$ oder einen Teil dessen einschließt.

**7.** Erfassungs- und Lokalisierungssystem nach einem der Ansprüche 4 bis 6, **dadurch gekennzeichnet, daß** die Erfassung eines Ereignisses (C) real ist, wenn das Überschreiten einer Schwelle (S) mit einer zuvor festgelegten Höhe an wenigstens einem der Pegel (Niv), Komponente des aus dem erfaßten Zeitsignal hervorgegangenen Deskriptors $(21_i)$ beobachtet wird.

**8.** Erfassungs- und Lokalisierungssystem nach Anspruch 7, **dadurch gekennzeichnet, daß** die Schwellen (S), die für eine jede der Komponenten (Niv) des Deskriptors $(21_i)$ verwendet werden, autoadaptiv sind, wobei ihre Anpassung mit Hilfe des bei jeder der Komponenten des Deskriptors $(21_i)$ beobachteten mittleren Pegels erfolgt.

**9.** Erfassungs- und Lokalisierungssystem nach Anspruch 8, **dadurch gekennzeichnet, daß** die adaptive Schwelle (S) für wenigstens eine der Komponenten des Deskriptors nach folgender Formel berechnet wird: Mittlerer Pegel der Komponente + M.(mittlere Standardabweichung der Komponente).

**10.** Erfassungs- und Lokalisierungssystem nach Anspruch 9, **dadurch gekennzeichnet, daß** der mittlere Pegel und die mittlere Standardabweichung durch Anwendung eines Vergessensfaktors, der in Richtung der bei der Berechnung der Mittelwerte verwendeten ältesten Werte abnimmt, berechnet werden.

**11.** Erfassungs- und Lokalisierungssystem nach einem der vorhergehenden Ansprüche, **dadurch gekennzeichnet, daß** die Ereignisarten (C) jeweils bestimmten Komponenten (Niv) des Deskriptors zugeordnet sind, um deren Unterscheidung zu ermöglichen.

**12.** Verfahren zur Erfassung und Lokalisierung eines Ereignisses (C) vom Typ heftiger mechanischer Stoß, Leck oder Drucktransiente in einer Rohrleitung (1) zum Befördern eines Fluids, das wenigstens zwei abgesetzte Erfassungsmodule $(10_{i-1}, 10_i)$ verwendet, die dazu bestimmt sind, durch ein Kommunikationsnetz (12) untereinander verbunden zu werden und an der Rohrleitung (1) durch bekannte Abstände $(D_{i-1, i})$ getrennt voneinander angeordnet zu werden, wobei das Verfahren die folgenden Schritte umfaßt, die innerhalb eines jeden abgesetzten Moduls $(10_i)$ durchgeführt werden:

- Erfassen eines Zeitsignals $(20_i)$, das von wenigstens einem Sensor $(11_i)$ für Schallwellen oder Erschütterungen oder Belastungen stammt, der dem abgesetzten Modul $(10_i)$ zugeordnet und ihm gegenüber festgelegt ist,
- Zeitstempeln (22) des Zeitsignals $(20_i)$,
- Verarbeiten des Zeitsignals $(20_i)$, um Schallwellen oder Erschütterungen oder Belastungen, welche einen heftigen mechanischen Stoß oder ein Leck oder eine Drucktransiente erkennen lassen, zu erfassen,
**gekennzeichnet durch**
- Aussenden eines Erfassungssignals $(23_i)$, das dem Zeitstempel (22) des der Erfassung entsprechenden Zeitsignals $(20_i)$ zugeordnet ist, über das Kommunikationsnetz (12) an das oder die benachbarten abgesetzten Module $(10_{i-1}, 10_{i+1})$, bei der internen Erfassung - **durch** die Verarbeitungsmittel (103) des abgesetzten Moduls $(10_i)$ - von Schallwellen oder Erschütterungen oder Belastungen, welche einen heftigen mechanischen Stoß oder ein Leck oder eine Drucktransiente erkennen lassen,
- Empfangen eines Erfassungssignals oder mehrerer Erfassungssignale $(23_j)$ von dem oder den benachbarten abgesetzten Modulen $(10_i, j=i-1, i+1)$ über das Kommunikationsnetz (12),
- Bestätigen und Lokalisieren des heftigen mechanischen Stoßes, des Lecks oder der Drucktransiente **durch** Analyse der Kohärenz der Erfassungssignale $(23_{i-1, 23i}, 23_{i+1})$.

FIG.1

FIG.2

FIG.3

13

**RÉFÉRENCES CITÉES DANS LA DESCRIPTION**

**Documents brevets cités dans la description**

- WO 0181885 A
- DE 19528287
- US 2006174707 A